# EUROPEAN PATENT SPECIFICATION

(11) **EP 2 469 063 B1**
(45) Date of publication and mention of the grant of the patent: **30.10.2013**
(21) Application number: 11192932.9
(22) Date of filing: 12.12.2011
(51) Int. Cl.: F02D 41/22, F16H 61/12

(54) **Drive unit control device and control method**
Vorrichtung zur Steuerung einer Antriebseinheit und Steuerverfahren
Dispositif de contrôle d'unité de commande et procédé de contrôle

(30) Priority: 27.12.2010 JP 2010290190
(43) Date of publication of application: 27.06.2012
(73) Proprietor: Bosch Corporation, Tokyo 150-8360 (JP)
(72) Inventor: Ishikawa, Naruaki, Higashimatsuyama-shi Saitama 355-8603 (JP)
(74) Representative: Dreiss

(56) References cited:
- DE-A1-102006 016 818
- JP-A- 57 150 001
- US-A- 5 529 041
- US-A1- 2006 075 808

## Description

The present invention relates to a vehicle drive unit control device and control method.

As a prior technology relating to a vehicle drive unit control device and control method and particularly relating to error detection at the time of a fault in a drive unit, there is a publicly disclosed technology where, for example, for the purpose of output control, only one computational element (a microcomputer) for executing a control function and a monitoring function is disposed, at least two levels that are mutually independent are disposed inside the microcomputer, and here a first level executes the control function and a second level executes the monitoring function (see JP-A-10-507805).

In order to improve reliability, sometimes a single control section performs vehicle drive unit error detection by concurrently executing two programs (a first program and a second program) that are mutually independent. In this case, different parameters may be used for the two programs. For example, the first program is in charge of error detection as a main program, and the subordinate second program performs error detection in a case where the first program cannot identify error detection due to a fault or the like in an ECU (Engine Control Unit). At this time, parameters that differ between the first program and the second program are set in relation to threshold values and error detection cycles in such a way that the calculation cycle of the main first program becomes shorter.

A configuration where the first program serving as a main program and the second program serving as a subordinate program independently concurrently perform error detection and where the second program monitors the error detection by the first program is also conceivable. This would, for example, be a configuration where the main first program executes error detection in a shorter calculation cycle and where the subordinate second program executes error detection in a longer calculation cycle and also executes monitoring.

However, in such a configuration, sometimes a deviation arises in the judgments between the first program and the second program. For example, the first program whose calculation cycle is shorter detects errors on the basis of most recent state information, but the second program whose calculation cycle is longer performs processing on the basis of state information that is older than the state information used by the first program, so a state where the second program does not detect errors arises. In such a case, the first program executes an error avoidance action such as holding the previous state information that was normal, but the second program remains in the state where it does not detect errors, and a deviation arises in the judgments between both. As a result of this, a situation where the monitoring function of the second program works with respect to the avoidance action after error detection by the first program and where the avoidance action by the first program is restricted, or a situation where the error avoidance action by the first program is judged to be not normal, arises.

As a method of avoiding such a situation, for example, there is a method where a difference is disposed between the calculation cycle by the first program and the monitoring cycle by the second program and where the latter is set sufficiently longer than the former, whereby such a situation can be easily avoided. However, due to other safety restrictions, changing the cycle times is difficult to implement. Moreover, an avoidance method where cycle time settings are set per vehicle is also conceivable but is not realistic.

As another avoidance method, for example, a method where the sets of state information are forcibly made to coincide between the first program and the second program is also conceivable. However, in a case where trouble has arisen in the error detection processing of the first program on the basis of defective state information, such as a case where, for example, a detection time counter is defective, even the second program cannot identify errors because the sets of state information are made to coincide between the first program and the second program.

It is an object of the present invention to provide a control device and so forth with improved error detection reliability in a case where a single control section performs control of a drive unit of a vehicle by concurrently executing two programs that are mutually independent.

Further, when a fault or the like in the first program is detected by the monitoring of the second program, a reaction action is decided in accordance with the extent of that fault. For example, when the fault is diagnosed as being a major fault requiring a shutdown of the supply of electric current to injectors, the supply of electric current is shut down. When the driver switches off the ignition thereafter, it is conceivable for the control section that has executed the faulty first program to fall into a state such as one where shutdown is impossible as a result of executing a shutdown procedure. In order to avoid this, sometimes the power source of a main relay is cut off and the control section is completely brought to an emergency shutdown in accordance with the operation of switching off the ignition.

However, in such an emergency shutdown situation, the state information prior to the shutdown of the control section cannot be saved in temporary saving means such as an EEPROM, so when the driver switches on the ignition thereafter, a main relay shutdown abnormality is detected.

It is another object of the present invention to provide a control device and so forth where there is reliability in a return action after an emergency shutdown action during a major fault that has been executed by a second program that has detected a major fault in a first program.

In order to solve the above-described problems, a vehicle drive unit control device pertaining to the present invention includes control means that executes a first module that detects errors in a drive unit of a vehicle and a second module that detects errors in the drive unit independently of and concurrently with the first module, wherein the second module has the function of monitoring the error detection of the first module and performs shutdown control of the drive unit when the first module continues to detect an error in the drive unit for a predetermined amount of time or longer.

Further, the first module generates an error status and state information of the drive unit when the first module has detected an error in the drive unit, and on the basis of the error status and the state information that have been generated, the second module judges the duration of the error detection by the first module and performs shutdown control of the drive unit.

Moreover, the second module measures the duration of the error status that has been generated and judges the duration of the error detection by the first module.

Moreover still, the vehicle drive unit control device further includes monitoring means that monitors the control means and a nonvolatile memory that stores state information at the time of a shutdown, wherein when a major fault requiring a shutdown of the supply of electric current to the drive unit has arisen in the control means, the monitoring means performs an emergency shutdown of a main relay that supplies electric power to the drive unit.

In order to solve the above-described problems, a vehicle drive unit control method pertaining to the present invention includes: a first error detection step by a first module that detects errors in a drive unit of a vehicle; a second error detection step by a second module that detects errors in the drive unit independently of and concurrently with the first error detection step; a step in which the first module generates an error status and state information of the drive unit when an error in the drive unit is detected in the first error detection step; a step in which the second module measures the duration of the error detection by the first module on the basis of the error status that has been generated; and a step in which the first module performs shutdown control of the drive unit when the duration that has been measured exceeds a predetermined amount of time.

Further, the vehicle drive unit control method further includes a step in which the second module detects a major fault requiring a shutdown of the supply of electric current to the drive unit when the duration that has been measured does not exceed the predetermined amount of time and a step in which the second module performs an emergency shutdown of a main relay that supplies electric power to the drive unit when a major fault has been detected.

Moreover, the step of performing an emergency shutdown of the main relay includes a step of recording, in a nonvolatile memory, an indication that processing of the emergency shutdown has ended normally.

According to the above-described configurations, when the first module continues to detect an error in the drive unit for a predetermined amount of time or longer, the second module performs shutdown control of the drive unit, so there can be provided a control device and so forth in which there is an improvement in the reliability of error detection.

Further, when a major fault requiring a shutdown of the supply of electric current to the drive unit has arisen, the monitoring means performs an emergency shutdown of the main relay that supplies electric power to the drive unit, and the nonvolatile memory stores state information at the time of the shutdown, so there can be provided a control device and so forth where there is reliability in a return action after a shutdown action during a major fault.
FIG. 1 is a block diagram of a control device overall in an embodiment of the present invention;
FIG. 2 is a flowchart of a control method that is executed in the control device disclosed in FIG. 1; and
FIG. 3 is a flowchart showing details of an emergency shutdown control step at the time of a major fault in FIG. 2.

### (Configuration of Control Device)

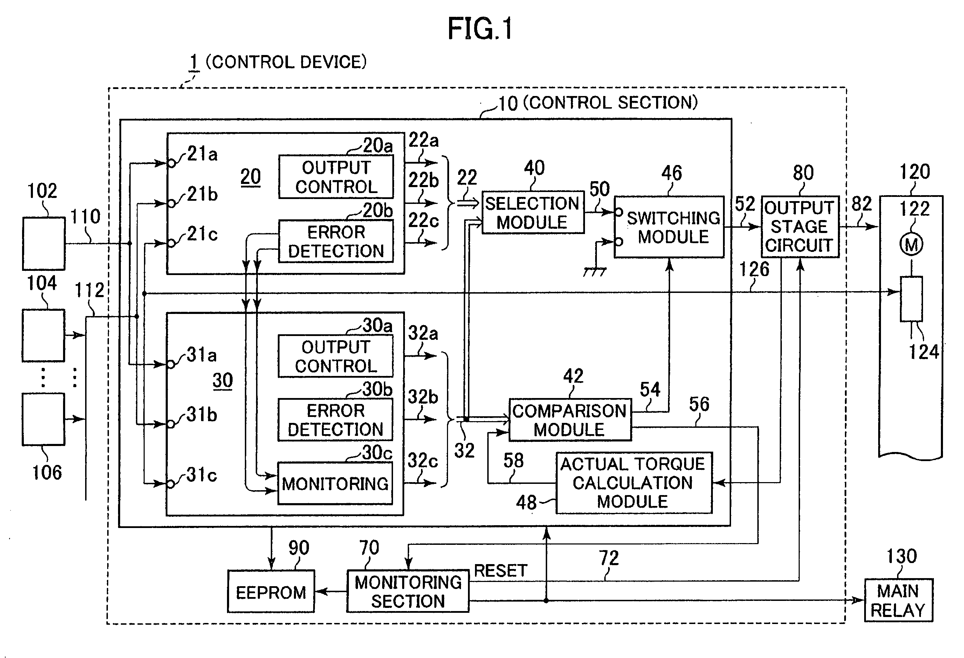

FIG. 1 shows a block diagram of a control device 1 overall that controls a drive unit (an electronically controlled engine) of a vehicle.

The control device 1 has a control section 10 serving as an example of control means that executes output control and error detection and a monitoring section 70 serving as an example of monitoring means that monitors the control section 10. Further, the control device 1 has an output stage circuit 80 to which the monitoring section 70 is connected via a line 72. The output stage circuit 80 is connected to an outside unit such as a throttle valve setting element 120 outside the control device 1 via a line 82. The output stage circuit 80 receives the output from a switching module 46 and generates a signal to supply electric current to injectors (not shown in the drawings). Moreover, the control device 1 has an EEPROM 90 serving as an example of a nonvolatile memory that stores state information at the time of a shutdown.

### (Control Section)

The control section 10 is connected to an input line 110 that inputs to the control section 10 the output of a measurement device (position sensor) 102 that measures an operation (pedal position) by a driver on an accelerator pedal or the like. Further, the control section 10 is connected to an input line 112 of a bus line that inputs to the control device 1 measurement values such as an engine temperature, an engine load, an engine rotation speed 104, and a tire rotation speed 106.

Moreover, the control section 10 is connected to an input line 126 to which an air supply quantity (the position of an electrically operated throttle valve) measured by a measurement device 124 is inputted. The input lines 110, 112, and 126 are inputted to the control section 10 from two sets of input ports 21a to 21c and 31a to 31c that are mutually independent. The two sets of input ports 21a to 21c and 31a to 31c are input ports to a first level module 20 and a second level module 30 that will be described later.

The control section 10 is connected to output lines 22a and 32a that perform ignition timing control of the injectors (not shown in the drawings), output lines 22b and 32b that perform fuel supply control, and output lines 22c and 32c that perform air supply control. In FIG. 1, these sets of three output lines for control are lumped together into single lines and are respectively indicated as output lines 22 and 32.

The control section 10 is connected to the monitoring section 70 via a line 56.

The control section 10 is configured by a microcomputer (CPU), for example.

The control section 10 has a first level module 20 that executes an output control module 20a and an error detection module 20b and a second level module 30 that executes an output control module 30a and an error detection module 30b independently of and concurrently with the first level module 20. The second level module 30 also executes a monitoring module 30c that monitors the first level module 20.

The control section 10 has a selection module 40 that receives the output of the first level module 20 and the output of the second level module 30 and outputs the value of either one. In the case of required torque calculation in the present embodiment, the selection module 40 outputs the lower value of the output (required torque that has been calculated) of the first level module 20 and the output (required torque that has been calculated) of the second level module 30.

Further, the control section 10 has a comparison module 42 that compares, with the output of the second level module 30, a measurement value that has been fed back from the outside. In the case of required torque calculation in the present embodiment, the comparison module 42 compares, with the calculated value of the required torque that the second level module 30 outputs, an effective torque that is calculated in an actual torque calculation module 48 (described later) from the time in which electric current is supplied to the injectors (not shown in the drawings), for example.

Moreover, the control section 10 has a switching module 46 that outputs either one of the output of the selection module 40 and the output of the comparison module 42. The switching module 46 shuts down, via the output stage circuit 80, the supply of electric current to the injectors (not shown in the drawings) at a time when an abnormality occurs, for example.

Moreover still, the control section 10 has an actual torque calculation module 48 that calculates an effective torque on the basis of the electric current supply signal (electric current supply time) that the output stage circuit 80 generates.

### (Monitoring Section)

The monitoring section 70 is configured by a microcomputer (CPU), for example. The monitoring section 70 monitors the state of a control program of the control section 10 on the basis of the output of the comparison module 42 that is inputted via the line 56.

Further, the monitoring section 70 is connected to the output stage circuit 80 via the line 72. The monitoring section 70 functions as final shutdown means at a time when a major fault (described later) occurs. The monitoring section 70 resets the control section 10 via the line 72 as needed and shuts down the output of signals from the output stage circuit 80 to the outside.

The functions of the control device 1 having the above configuration will be described below.

Inside the control section 10, the first level module 20 and the second level module 30 concurrently execute control programs that execute drive unit output control and error detection. The first level module 10 executes its control program mainly. Specifically, the first level module 20 executes a control program that controls the drive unit in a calculation cycle of 10 msec, for example.

In contrast, the second level module 30 executes its control program subordinately and also performs monitoring of the error detection of the first level module 20. For the purpose of alleviating the computational load inside the control section 10, the calculation cycle of the second level module 30 is set lower than the calculation cycle of the first level module 20. Specifically, the calculation cycle of the second level module 30 is 40 msec, for example.

The drive unit output control specifically is ignition timing control, fuel supply control, and air supply control. For example, the pedal position that has been measured by the accelerator pedal position sensor 102 is inputted via the input line 110 and the input ports 21a and 31a. The measurement values such as the engine temperature, the engine load, and the engine rotation speed that have been measured by the measurement device 104 are inputted via the input line 112 and the input ports 21b and 31b. Or, the position of the electronically operated throttle valve (air supply quantity) that has been measured by the measurement device 124 is inputted via the input line 126 and the input ports 21c and 31c.

On the basis of these measurement values, the ignition timing that is to be regulated and the fuel supply quantity that is to be supplied are decided and outputted via the output lines 22a and 32a and the output lines 22b and 32b. Further, the target value of the air supply quantity (target value of the position of the throttle valve) is decided and outputted via the output lines 22c and 32c, and drive unit air supply control is executed.

The drive unit error detection specifically compares the output values of the device with the input values and detects an error in a case where there is a deviation. For example, an error is detected in a case where there is a deviation between the pedal position that has been measured by the accelerator pedal position sensor 102 and the corresponding air supply quantity, fuel supply quantity, and engine load. Or, an error is detected in a case where there is a deviation between the target value of the air supply quantity (target value of the position of the throttle valve) and the actual position of the throttle valve that is supplied via the input line 126 from the measurement device 124. Moreover, an error is detected on the basis of the output of the accelerator pedal position sensor 102.

### (Monitoring of Error Detection)

The second level module 30 monitors the error detection by the first level module 20. Specifically, the first level module 20 and the second level module 30 execute error detection independently of and concurrently with each other, and the monitoring module 30c of the second level module 30 monitors whether or not the error detection result of the first level module 20 is normal.

Parameters are set in such a way that the second level module 30 can perform error detection in a case where the first level module 20 cannot perform error detection due to a fault in an ECU or the like. Specifically, a threshold value and a diagnosis time in the first level module 20 are set to smaller values in comparison to those in the second level module 30.

When the first level module 20 detects an error, the error detection module 20b of the first level module 20 generates an error status and an accelerator pedal position that serves as an example of state information and sends these to the monitoring module 30c of the second level module 30. When the second level module 30 receives the error status and the accelerator pedal position, the accelerator pedal position in the second level module 30 becomes identical to that in the first level module 20. Consequently, ordinarily no deviation arises in the results of error detection.

In this configuration, in a case where error detection cannot be identified in the first level module 20 due to a reason such as a defect in a detection time counter, for example, there arises a situation where even the second level module 30 that has the identical accelerator pedal position cannot detect errors. In order to avoid the occurrence of such a situation beforehand, the second level device 30 is given a configuration where it detects an error when the error status that the first level module 20 sends to the second level module 30 as a result of the first level module 20 detecting an error continues to be detected for a predetermined amount of time or longer in the second level module 30. The predetermined amount of time is 500 msec, for example.

A control method in the drive unit control device 1 that has the above configuration will be described below taking accelerator pedal diagnostics as an example.

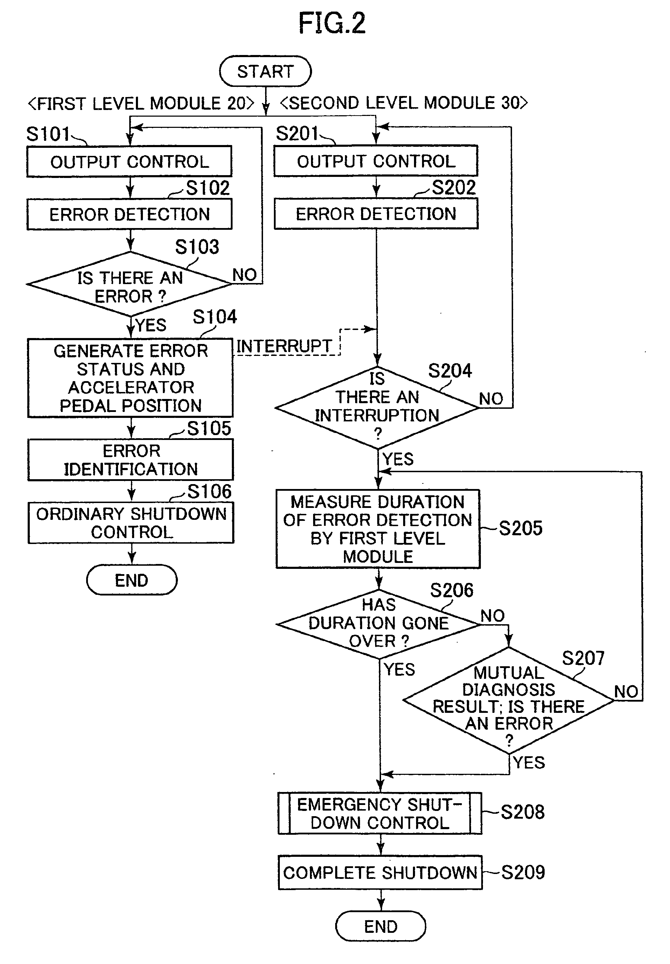

FIG. 2 is a flowchart of a control method that is executed in the control device 1 disclosed in FIG. 1.

In a steady state, the pedal position information that the accelerator pedal position sensor 102 has measured is mutually independently sent to the first level module 20 and the second level module 30 via the input line 110 and the input ports 21a and 31a. In the accelerator pedal diagnostics in the present embodiment, in the accelerator pedal, two position sensors 102 (FIG. 1) that are mutually independent output two sets of pedal position information APP1 and APP2 that are mutually independent, and the sets of pedal position information APP1 and APP2 are respectively sent to the first level module 20 and the second level module 30.

On the basis of the various measurement values that are inputted via the input lines 110, 112, and so forth, the first level module 20 executes drive unit output control (step 101) and executes error detection (step 102). In the accelerator pedal diagnostics, on the basis of a deviation between the set of pedal position information APP1 that has been inputted via the input line 110 and the input port 21a and the air supply quantity, the fuel supply quantity, and the engine load that have been inputted via the input lines 112 and 126 and the input ports 21b and 21c, the first level module 20 executes drive unit output control, performs a mutual diagnosis between the two sets of pedal position information APP 1 and APP2, and executes error detection. Specifically, for example, the first level module 20 judges that there is an error in a case where there is a deviation between the two sets of pedal position information APP1 and APP2.

When the first level module 20 does not detect an error (NO in step 103), it returns to the output control step (step 101).

In contrast, when the first level module 20 detects an error (YES in step 103), the first level module 20 generates an error status and an accelerator pedal position that serves as an example of state information (step 104). The error status and accelerator pedal position that have been generated are transmitted as an interruption with respect to the second level module 30.

Next, the first level module 20 identifies the error detection result (step 105). Specifically, the first level module 20 stops generating the error status. Then, on the basis of the accelerator pedal position, the first level module 20 handles the result as meaning that the mutual diagnostic logic of the sets of pedal position information APP1 and APP2 of the accelerator pedal in the first level module 20 is faulty and moves to an ordinary shutdown control step (step 106).

In the ordinary shutdown control step (step 106), the first level module 20 collectively performs an ordinary shutdown step including diagnosis of a main relay and saving of error information, outputs a shutdown signal with respect to the selection module 40, shuts down via the switching module 46 and the output stage circuit 80 the supply of electric current to the injectors (not shown in the drawings), writes in the EEPROM 90 a flag indicating that shutdown has ended normally, and performs a shutdown.

Meanwhile, concurrently with the execution of the output control step (step 101) and the error detection step (step 102) by the first level module 20, the second level module 30 likewise executes a drive unit output control step (step 201) based on a deviation between the set of pedal position information APP1 and the air supply quantity, the fuel supply quantity, and the engine load and an error detection step (step 202) by a mutual diagnosis between the two sets of pedal position information APP1 and APP2.

As long as there is no interruption (NO in step 204) based on the generation of the error status and the accelerator pedal position by the first level module 20 (step 104), the second level module 30 repeatedly executes the output control step (step 201) and the error detection step (step 202). At this time, the execution cycle of the subordinate second level module 30 is set longer than the calculation cycle of the main first level module 20.

In contrast, in a case where there is an interruption (YES in step 204) based on the generation of the error status and the accelerator pedal position by the first level module 20 (step 104), then on the basis of the error status that has been generated, the second level module 30 measures the duration of the error detection by the first level module 20 (step 205).

When the duration that has been measured exceeds a predetermined amount of time (YES in step 206), the result is handled as a major fault in the ECU requiring an emergency shutdown of the supply of electric current to the injectors, and the second level module 30 moves to an emergency shutdown control step (step 208) at the time of a major fault. The details of the emergency shutdown control step at the time of a major fault will be described separately.

In contrast, when the duration has not gone past the predetermined amount of time (NO in step 206), the second level module 30 appropriates the result of the error detection by the mutual diagnosis between the two sets of pedal position information APP1 and APP2 that the second level module 30 executed in step 202. That is, when an error is not detected (NO in step 207) as a result of the error detection that was executed on the basis of the deviation between the set of pedal position information APP1 and the air supply quantity, fuel supply quantity, and engine load, then on the basis of only the unidentified error detection result by the first level module 20, the second level module 30 does not handle the result as a fault in the ECU and handles the result as not being a fault in the ECU. Then, the second level module 30 returns to the error detection duration measurement step (step 205).

On the other hand, when an error is detected (YES in step 207), the second level module 30 executes the emergency shutdown control step at the time of a major fault (step 208) such as stopping the supply of electric current to the injectors (not shown in the drawings). Thereafter, the second level module 30 performs a complete shutdown (step 209).

The step (step 205) described above of measuring the duration of the error detection may be performed by measuring the amount of time in which the error status is generated by the first level module 20—that is, measuring the amount of elapsed time from the time when the first level module 20 has initially generated the error status—or measuring the number of times of generation of an error status that the first level module 230 generates every calculation cycle.

### (Emergency Shutdown Control Step at Time of Major Fault)

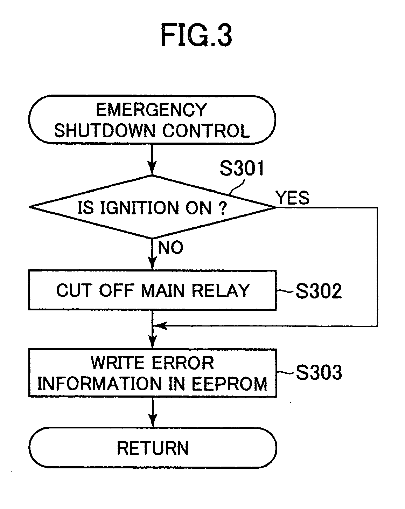

Next, the emergency shutdown control step (step 208) at the time of a major fault in the ECU that is executed in the comparison module 42 will be described using FIG. 3.

FIG. 3 is a flowchart showing the details of the emergency shutdown control step at the time of a major fault in FIG. 2.

When the duration that was measured in step 205 exceeds the predetermined amount of time (YES in step 206) or when it has been judged as a result of the mutual diagnosis that there is an error (YES in step 207), then it is judged whether or not the ignition (not shown in the drawings) is on (step 301).

When the ignition is not on (NO in step 301), the second level module 30 outputs a shutdown signal with respect to the comparison module 42, the comparison module 42 outputs an emergency shutdown signal with respect to the monitoring section 70, and the monitoring section 70 cuts off the supply of electric power to a main relay 130 (step 302). Then, the second level module 30 moves to a later-described write step (step 303).

In contrast, when the ignition is on (YES in step 301), the second level module 30 moves to the write step (step 303).

In the write step (step 303), the second level module 30 writes in the EEPROM 90 a flag indicating that the emergency shutdown control step at the time of a major fault has completely ended. Then, the second level module 30 ends the subroutine of the emergency shutdown control step at the time of a major fault and returns to the primary flowchart shown in FIG. 2.

In accordance with the flowcharts shown in FIGS. 2 and 3, if an error is identified in the first level module 20 (step 105), then the first level module 20 whose calculation cycle is shorter than that of the second level module 30 executes ordinary shutdown control (step 106).

However, due to whatever reason, when the predetermined amount of time has elapsed without ordinary shutdown control being executed (YES in step 206) or when it has been judged as a result of the mutual diagnosis that there is an error (YES in step 207), the second level module 30 executes emergency shutdown control (step 208).

In the control device 1 that includes the control section 10 that executes the first level module 20 and the second level module 30, the second level module 30 monitors the error detection of the first level module 20, and when the first level module 20 continues to detect an error in the drive unit for a predetermined amount of time or longer, the second level module 30 performs emergency shutdown control of the drive unit, so it becomes possible to improve the reliability of error detection in the control device 1.

Further, on the basis of the error status and the state information that have been generated by the first level module 20, the second level module 30 judges the duration of the error detection by the first level module 20, measures the duration of the error status that has been generated, and performs emergency shutdown control of the drive unit when the duration that has been measured exceeds the predetermined amount of time, so shutdown control whose reliability is higher becomes possible.

Moreover still, the control device 1 further has the monitoring section 70 that monitors the control section 10 and the EEPROM 90 that stores state information at the time of a shutdown, and when a major fault requiring a shutdown of the supply of electric current to the drive unit has arisen in the control section 10, the monitoring section 70 performs an emergency shutdown of the main relay 130 that supplies electric power to the drive unit, and the EEPROM 90 stores the state information at the time of the shutdown, so a return action after an emergency shutdown action during a major fault can be made reliable.

## Claims

1. A vehicle drive unit control device comprising control means that executes
a first module that detects errors in a drive unit of a vehicle and
a second module that detects errors in the drive unit independently of and concurrently with the first module,
wherein the second module has a function of monitoring the error detection of the first module and performs shutdown control of the drive unit when the first module continues to detect an error in the drive unit for a predetermined amount of time or longer.

2. The vehicle drive unit control device according to claim 1, wherein
the first module generates an error status and state information of the drive unit when the first module has detected an error in the drive unit, and
on the basis of the error status and the state information that have been generated, the second module judges the duration of the error detection by the first module and performs shutdown control of the drive unit.

3. The vehicle drive unit control device according to claim 2, wherein the second module measures the duration of the error status that has been generated and judges the duration of the error detection by the first module.

4. The vehicle drive unit control device according to claim 1, further comprising
monitoring means that monitors the control means and
a nonvolatile memory that stores state information at the time of a shutdown,
wherein when a major fault requiring a shutdown of the supply of electric current to the drive unit has arisen in the control means, the monitoring means performs an emergency shutdown of a main relay that supplies electric power to the drive unit.

5. A vehicle drive unit control method comprising:
a first error detection step by a first module that detects errors in a drive unit of a vehicle;
a second error detection step by a second module that detects errors in the drive unit independently of and concurrently with the first error detection step;
a step in which the first module generates an error status and state information of the drive unit when an error in the drive unit is detected in the first error detection step;
a step in which the second module measures the duration of the error detection by the first module on the basis of the error status that has been generated; and
a step in which the first module performs shutdown control of the drive unit when the duration that has been measured exceeds a predetermined amount of time.

6. The vehicle drive unit control method according to claim 5, further comprising
a step in which the second module detects a major fault requiring a shutdown of the supply of electric current to the drive unit when the duration that has been measured does not exceed the predetermined amount of time and
a step in which the second module performs an emergency shutdown of a main relay that supplies electric power to the drive unit when a major fault has been detected.

7. The vehicle drive unit control method according to claim 6, wherein the step of performing an emergency shutdown of the main relay includes a step of recording, in a nonvolatile memory, an indication that processing of the emergency shutdown has ended normally.

## Patentansprüche

1. Fahrzeugantriebseinheit-Steuervorrichtung, die Steuermittel umfasst, die Folgendes ausführen:
ein erstes Modul, das Fehler in einer Antriebseinheit eines Fahrzeugs detektiert, und
ein zweites Modul, das Fehler in der Antriebseinheit unabhängig von und konkurrent mit dem ersten Modul detektiert,
wobei das zweite Modul eine Funktion des Überwachens der Fehlerdetektion des ersten Moduls hat und eine Abschaltsteuerung der Antriebseinheit ausführt, wenn das erste Modul fortgesetzt einen Fehler in der Antriebseinheit für eine vorgegebene Zeitdauer oder länger detektiert.

2. Fahrzeugantriebseinheit-Steuervorrichtung nach Anspruch 1, wobei
das erste Modul einen Fehlerstatus und Zustandsinformationen der Antriebseinheit erzeugt, wenn das erste Modul einen Fehler in der Antriebseinheit detektiert hat, und
das zweite Modul anhand des Fehlerstatus und der Statusinformationen, die erzeugt worden sind, die Dauer der Fehlerdetektion durch das erste Modul beurteilt und eine Abschaltsteuerung der Antriebseinheit ausführt.

3. Fahrzeugantriebseinheit-Steuervorrichtung nach Anspruch 2, wobei das zweite Modul die Dauer des Fehlerstatus, der erzeugt worden ist, misst und die Dauer der Fehlerdetektion durch das erste Modul beurteilt.

4. Fahrzeugantriebseinheit-Steuervorrichtung nach Anspruch 1, die ferner Folgendes umfasst:
Überwachungsmittel, die die Steuermittel überwachen, und
einen nichtflüchtigen Speicher, der Zustandsinformationen zu der Zeit des Abschaltens speichert,
wobei die Überwachungsmittel dann, wenn in den Steuermitteln ein Hauptfehler entstanden ist, der ein Abschalten der Zufuhr von elektrischem Strom zu der Antriebseinheit erfordert, eine Notabschaltung eines Hauptrelais, das der Antriebseinheit elektrische Leistung zuführt, ausführen.

5. Fahrzeugantriebseinheit-Steuerverfahren, das Folgendes umfasst:
einen ersten Fehlerdetektionsschritt durch ein erstes Modul, der Fehler einer Antriebseinheit eines Fahrzeugs detektiert;
einen zweiten Fehlerdetektionsschritt durch ein zweites Modul, der Fehler in der Antriebseinheit unabhängig von und konkurrent mit dem ersten Fehlerdetektionsschritt detektiert;
einen Schritt, in dem das erste Modul einen Fehlerstatus und Statusinformationen der Antriebseinheit erzeugt, wenn ein Fehler in der Antriebseinheit in dem ersten Fehlerdetektionsschritt detektiert wird;
einen Schritt, in dem das zweite Modul die Dauer der Fehlerdetektion durch das erste Modul anhand des Fehlerstatus, der erzeugt worden ist, misst; und
einen Schritt, in dem das erste Modul eine Abschaltsteuerung der Antriebseinheit ausführt, wenn die Dauer, die gemessen worden ist, einen vorgegebenen Zeitbetrag überschreitet.

6. Fahrzeugantriebseinheit-Steuerverfahren nach Anspruch 5, das ferner Folgendes umfasst:
einen Schritt, in dem das zweite Modul einen Hauptfehler detektiert, der ein Abschalten der Zufuhr von elektrischem Strom zu der Antriebseinheit erfordert, wenn die Dauer, die gemessen worden ist, den vorgegebenen Zeitbetrag nicht überschreitet, und
einen Schritt, in dem das zweite Modul eine Notabschaltung eines Hauptrelais, das der Antriebseinheit elektrischen Strom zuführt, ausführt, wenn ein Hauptfehler detektiert worden ist.

7. Fahrzeugantriebseinheit-Steuerverfahren nach Anspruch 6, wobei der Schritt des Ausführens einer Notabschaltung des Hauptrelais einen Schritt des Aufzeichnens einer Angabe, dass die Verarbeitung der Notabschaltung normal beendet worden ist, in einem nichtflüchtigen Speicher umfasst.

## Revendications

1. Dispositif de commande d'une unité d'entrainement d'un véhicule comprenant des moyens de commande qui exécutent:
un premier module qui détecte des erreurs dans une unité d'entrainement d'un véhicule, et
un second module qui détecte des erreurs dans l'unité d'entrainement indépendamment et simultanément au premier module,
le second module ayant une fonction de surveillance de la détection d'erreur du premier module et mettant en oeuvre une commande d'arrêt de l'unité d'entrainement lorsque le premier module continue de détecter une erreur dans l'unité d'entrainement pendant un laps de temps prédéfini ou plus long.

2. Dispositif de commande d'une unité d'entrainement d'un véhicule conforme à la revendication 1, dans lequel:
le premier module génère un statut d'erreur et une information d'état de l'unité d'entrainement lorsque le premier module a détecté une erreur dans l'unité d'entrainement, et
à partir du statut d'erreur et de l'information d'état qui ont été générés, le second module estime la durée de la détection d'erreur par le premier module et met en oeuvre une commande d'arrêt de l'unité d'entrainement.

3. Dispositif de commande d'une unité d'entrainement d'un véhicule conforme à la revendication 2, dans lequel:
le second module mesure la durée du statut d'erreur qui a été généré et estime la durée de la détection d'erreur par le premier module.

4. Dispositif de commande d'une unité d'entrainement d'un véhicule conforme à la revendication 1, comprenant en outre:
des moyens de surveillance qui surveillent les moyens de commande et une mémoire non volatile qui enregistre l'information d'état au moment d'un arrêt,
dans lequel lorsqu'un défaut majeur nécessitant un arrêt de l'alimentation de l'unité d'entrainement en courant électrique s'est produit dans les moyens de commande, les moyens de surveillance mettent en oeuvre un arrêt d'urgence d'un relais principal qui fournit la puissance électrique à l'unité d'entrainement.

5. Dispositif de commande d'une unité d'entrainement d'un véhicule conforme comprenant:
une première étape de détection d'erreur par un premier module qui détecte des erreurs dans une unité d'entrainement d'un véhicule,
une seconde étape de détection d'erreur par un second module qui détecte des erreurs dans l'unité d'entrainement indépendamment et simultanément à la première étape de détection d'erreur,
une étape dans laquelle le premier module génère un statut d'erreur et une information d'état de l'unité d'entrainement lorsqu'une erreur dans l'unité d'entrainement est détectée dans la première étape de détection d'erreur,
une étape dans laquelle le second module mesure la durée de la détection d'erreur par le premier module à partir du statut d'erreur qui a été généré, et
une étape dans laquelle le premier module effectue une commande d'arrêt de l'unité d'entrainement lorsque la durée qui a été mesurée est supérieure à un laps de temps prédéfini.

6. Dispositif de commande d'une unité d'entrainement d'un véhicule conforme à la revendication 5, comprenant en outre:
une étape dans laquelle le second module détecte un défaut majeur exigeant un arrêt de l'alimentation en courant électrique de l'unité d'entrainement lorsque la durée qui a été mesurée n'est pas supérieure au laps de temps prédéfini, et
une étape dans laquelle le second module met en oeuvre un arrêt d'urgence d'un relais principal qui alimente l'unité d'entrainement en puissance électrique lorsqu'un défaut majeur a été détecté.

7. Dispositif de commande d'une unité d'entrainement d'un véhicule conforme à la revendication 6, dans lequel l'étape de mise en oeuvre d'un arrêt d'urgence du relais principal comporte une étape consistant à enregistrer dans une mémoire non volatile une indication selon laquelle la mise en oeuvre de l'arrêt d'urgence s'est achevée de façon normale.
